# EUROPÄISCHE PATENTSCHRIFT

(11) **EP 1 121 510 B1**
(45) Veröffentlichungstag und Bekanntmachung des Hinweises auf die Patenterteilung: **25.06.2003**
(21) Anmeldenummer: 99955808.3
(22) Anmeldetag: 27.09.1999
(51) Int. Cl.: F01K 23/10

(54) **VERFAHREN ZUM WIEDERANFAHREN EINER GAS- UND DAMPFTURBINENANLAGE**
METHOD FOR RESTARTING A GAS AND STEAM TURBINE INSTALLATION
PROCEDE POUR RELANCER UNE INSTALLATION DE TURBINE A GAZ ET A VAPEUR

(30) Priorität: 08.10.1998 DE 19846458
(43) Veröffentlichungstag der Anmeldung: 08.08.2001
(73) Patentinhaber: SIEMENS AKTIENGESELLSCHAFT, 80333 München (DE)
(72) Erfinder: SCHMID, Erich, D-91080 Marloffstein (DE); STIERSTORFER, Helmut, D-91054 Erlangen (DE); WALLMANN, Anja, D-91052 Erlangen (DE)
(86) Internationale Anmeldenummer: DE9903092
(87) Internationale Veröffentlichungsnummer: WO00022282

(56) Entgegenhaltungen:
- DE-A- 3 016 777

## Beschreibung

Die Erfindung betrifft ein Verfahren zum Wiederanfahren einer Gas- und Dampfturbinenanlage, bei dem das aus einer Gasturbine austretende Rauchgas über einen Abhitzedampferzeuger geführt wird, dessen Heizflächen in den Wasser-Dampf-Kreislauf der Dampfturbine geschaltet sind.

Bei einer Gas- und Dampfturbinenanlage wird die im entspannten Arbeitsmittel oder Rauchgas aus der Gasturbine enthaltene Wärme zur Erzeugung von Dampf für die Dampfturbine genutzt. Die Wärmeübertragung erfolgt in einem der Gasturbine rauchgasseitig nachgeschalteten Abhitzedampferzeuger, in dem Heizflächen in Form von Rohren oder Rohrbündeln angeordnet sind. Diese wiederum sind in den Wasser-Dampf-Kreislauf der Dampfturbine geschaltet. Der Wasser-Dampf-Kreislauf umfaßt dabei üblicherweise mehrere, beispielsweise drei, Druckstufen, wobei jede Druckstufe eine Vorwärm- und eine Verdampferheizfläche aufweist.

Von besonderer Bedeutung für die Auslegung einer Gas- und Dampfturbinenanlage ist die sogenannte Schwarzstartfähigkeit der Anlage. Beim Anfahren einer Gas- und Dampfturbinenanlage ist zunächst die Zuführung von Energie, beispielsweise zur Versorgung von Kühl- oder Hilfssystemen oder zum Anfahren der Gasturbine selbst, erforderlich. Erst nach erfolgter Lastaufnahme der Gasturbine kann diese die energetische Versorgung sämtlicher Hilfssysteme oder Eigenverbraucher übernehmen, so daß eine externe Energiezufuhr nicht mehr erforderlich ist. Bei einer Anbindung der Gas- und Dampfturbinenanlage an ein ausgedehntes Stromnetz erfolgt die externe Energiezufuhr dabei über das Stromnetz und ist somit unproblematisch. Falls allerdings kein externes Stromnetz zur Verfügung steht, beispielsweise weil dieses als ganzes ausgefallen ist ("schwarzes Netz") oder weil es sich um ein Inselnetz handelt, das ausschließlich von der Gas- und Dampfturbinenanlage bespeist ist, ist ein sogenannter Schwarzstart erforderlich, also ein Anfahren der Gas- und Dampfturbinenanlage ohne Rückgriff auf das angeschlossene Stromnetz. Aus der DE 195 44 226 A1 ist eine Gas- und Dampfturbinenanlage bekannt, bei der beim Anfahren bis zum Erreichen von überhitzten Bedingungen am Austritt des Hochdruckverdampfers Hochdruck-Sattwasser über eine Abscheideflasche in eine Trommel des Umlaufdampferzeugers mittels einer Hochdruckspeisepumpe rezirkuliert wird.

Zur Herstellung der Schwarzstartfähigkeit weist die Gas- und Dampfturbinenanlage üblicherweise ein Dieselaggregat oder ein sonstiges Notstromaggregat auf, das die Versorgung der zum Anfahren erforderlichen Komponenten auch ohne Rückgriff auf das Stromnetz sicherstellt. Für die Auslegung dieser Notstromaggregate ist üblicherweise der Fall eines sogenannten Heißstarts zugrundezulegen, bei dem die Gas- und Dampfturbinenanlage bedingt durch einen Ausfall des Stromnetzes notabgeschaltet wurde und unmittelbar darauf, also mit noch heißem Abhitzekessel, wiederangefahren werden soll.

In diesem Fall sind die Notstromaggregate derart auszulegen, daß zusätzlich zur Kapazität zum sogenannten Anschleppen oder Anfahren der Gasturbine an sich auch Kapazität zur Versorgung der wesentlichen Aggregate des Abhitzedampferzeugers, insbesondere der Kühlwasserpumpen und/oder der Speisewasserpumpen, zur Verfügung steht. Dies ist insbesondere für eine ausreichende Kühlung des Abhitzedampferzeugers und somit zur Vermeidung von Schäden bedeutsam. Da diese Aggregate, gerade im Vergleich zur Gasturbine an sich, jedoch eine bedeutend erhöhte Bereitstellung von Versorgungskapazität verlangen, ist eine für einen Schwarzstart beim Wiederanfahren nach einem Netzausfall ausgelegte Gas- und Dampfturbinenanlage, insbesondere hinsichtlich Erstellung und Montage, besonders aufwendig, zumal gerade bei der Auslegung und Konzeptionierung der Notstromaggregate der Aufwand überproportional zur geforderten Leistungskapazität ansteigt.

Alternativ zu einer besonders großzügigen Dimensionierung der Notstromaggregate kann eine für einen Schwarzstart beim Wiederanfahren nach einem Netzausfall ausgelegte Gas- und Dampfturbinenanlage auch mit einem Bypass-Kamin ausgerüstet sein, über den beim Heißstart das Rauchgas der Gasturbine unter Umgehung des Abhitzekessels geführt wird. Eine Energieversorgung der Hilfskomponenten des Abhitzekessels beim Wiederanfahren ist somit nicht erforderlich, so daß die Notstromaggregate entsprechend gering dimensioniert ausgeführt sein können. Ein derartiger Bypass-Kamin bedeutet jedoch zusätzlichen, unerwünschten Herstellungs- und Montageaufwand, so daß moderne Gas- und Dampfturbinenanlagen üblicherweise ohne Bypass-Kamin ausgeführt sind.

Der Erfindung liegt daher die Aufgabe zugrunde, ein Verfahren zum Wiederanfahren einer Gas- und Dampfturbinenanlage der oben genannten Art anzugeben, bei dem auch für eine Anlage ohne Bypasskamin ein Schwarzstart auch bei einem Heißstart mit besonders geringem Aufwand ermöglicht ist.

Diese Aufgabe wird erfindungsgemäß gelöst, indem in einer Anzahl von in den Wasser-Dampf-Kreislauf der Dampfturbine geschalteten Wasser-Dampf-Trommeln Dampf erzeugt wird, wobei die Zuführung des in den Wasser-Dampf-Trommeln erzeugten Dampfes in einen in den Wasser-Dampf-Kreislauf der Dampfturbine geschalteten Kondensator und die Einspeisung von aus dem Kondensator abströmendem Speisewasser in eine Hochdruckstufe der Dampfturbine mittels einer Speisewasserpumpe erst bei erfolgter Lastaufnahme der Gasturbine freigegeben werden.

Die Erfindung geht dabei von der Überlegung aus, daß die Schwarzstartfähigkeit der Gas- und Dampfturbinenanlage auch bei einem Heißstart mit besonders geringem Aufwand sichergestellt sein kann, indem die im Rauchgas der Gasturbine geführte Abwärme für eine kurze Zeitspanne von einigen Minuten nach dem Starten des Wiederanfahrprozesses in den großen Material- und Wassermassen im Abhitzedampferzeuger zwischengespeichert wird. Eine zuverlässige Kühlung des Abhitzedampferzeugers ist dabei gewährleistet, indem in den Wasser-Dampf-Trommeln Dampf erzeugt wird. Auf eine Zuleitung dieses Dampfes in den Kondensator wird allerdings zunächst verzichtet, so daß der Kondensator während dieser Phase nicht betriebsbereit gehalten werden muß. Somit kann eine Kühlung des Kondensators in dieser Phase entfallen, so daß ein zur Herstellung der Schwarzstartfähigkeit vorgesehenes Notstromaggregat nicht zur Versorgung der entsprechenden Kühlsysteme ausgelegt sein muß. Die Zuleitung des erzeugten Dampfes in den Kondensator ist dabei erst zu einem Zeitpunkt nach der Lastaufnahme der Gasturbine vorgesehen. In dieser Phase erfolgt die Energieversorgung der Hilfssysteme des Abhitzedampferzeugers bereits wieder über die Gasturbine, so daß auch die Kühlsysteme für den Kondensator wieder aktiviert sind.

Alternativ oder in vorteilhafter Weiterbildung wird vor einem Start der Gasturbine zur Erstbefüllung einer Anzahl von in den Wasser-Dampf-Kreislauf der Dampfturbine geschalteten Wasser-Dampf-Trommeln eine einer Speisewasserpumpe vorgeschaltete Kondensatpumpe verwendet. Dazu wird die Speisewasserpumpe mediumseitig in geeigneter Weise umführt.

Dabei liegt die Erkenntnis zugrunde, daß für einen Schwarzstart beim Heißstart oder auch beim Warm- oder Kaltstart für einen besonders geringen Aufwand konsequent auf den Betrieb von Hilfskomponenten mit besonders hohem Eigenverbrauch verzichtet werden sollte. Gerade die Speisewasserpumpe weist jedoch einen besonders hohen Eigenverbrauch auf, der sich aus dem direkten Energiebedarf einerseits und aus dem indirekten Bedarf über das benötigte Kühlwasser und die dafür erforderlichen Systeme, wie beispielsweise einer Kühlwasserpumpe, zusammensetzt.

Zweckmäßigerweise wird dabei zur Erstbefüllung in jeder Wasser-Dampf-Trommel ein im Vergleich zum Förderdruck der Kondensatpumpe, der beispielsweise bei bis zu 25 bar liegt, geringerer Druck eingestellt. Insbesondere in einer Hochdruckund in einer Mitteldrucktrommel kann dazu eine Druckabsenkung vorgesehen sein, die beispielsweise über Umleitstationen oder durch Abblasen in die Umgebungsatmosphäre oder auch über Entlüftungs- und/oder Entwässerungsventile vorgenommen werden kann.

Die mit der Erfindung erzielten Vorteile bestehen insbesondere darin, daß durch den konsequenten Verzicht auf den Betrieb energieaufwendiger Hilfssysteme beim Wiederanfahren ein Schwarzstart auch als Heißstart und für eine Anlage ohne Bypass-Kamin die erforderlichen Notstromaggregate besonders gering dimensioniert ausgeführt sein können und somit nur einen geringen Montage- und Herstellungsaufwand bedingen. Dies ist besonders günstig erreichbar durch den Verzicht sowohl auf den Kondensator als auch auf die Speisewasserpumpen während einer kurzen Phase beim Wiederanfahren, da gerade diese Systeme, auch wegen des für sie erforderlichen Kühlsystems, einen besonders hohen Energieeigenbedarf aufweisen.

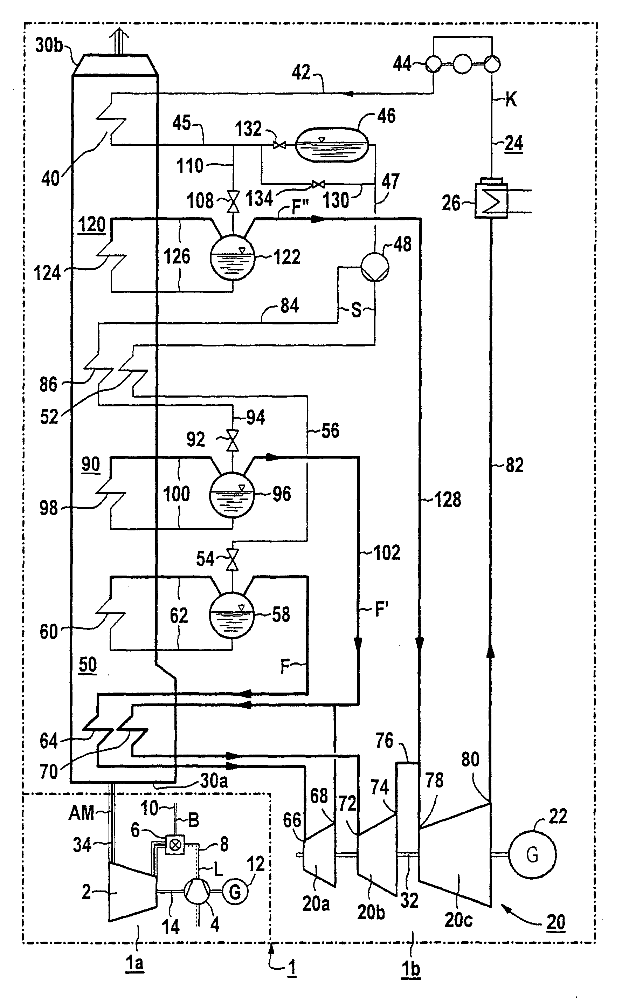

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 1 gemäß der Figur umfaßt eine Gasturbinenanlage 1a und eine Dampfturbinenanlage 1b. Die Gasturbinenanlage 1a umfaßt eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Gasturbine 2 und der Luftverdichter 4 sowie ein Generator 10 sitzen auf einer gemeinsamen Welle 12.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verläßt den Abhitzedampferzeuger 30 über dessen Ausgang 30b in Richtung auf einen nicht näher dargestellten Kamin.

Der Abhitzedampferzeuger 30 umfaßt einen Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kann zudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine als Hochdruckspeisepumpe mit Mitteldruckentnahme ausgebildete Speisewasserpumpe 48 angeschlossen.

Die Speisewasserpumpe 48 bringt das aus dem Speisewasserbehälter 46 abströmende Speisewasser S auf ein für eine dem Hochdruckteil der Dampfturbine 20 zugeordnete Hochdruckstufe 50 des Wasser-Dampf-Kreislaufs 24 geeignetes Druckniveau. Das unter hohem Druck stehende Speisewasser S ist der Hochdruckstufe 50 über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlaß 66 des Hochdruckteils 20a der Dampfturbine 20 verbunden ist.

Der Dampfauslaß 68 des Hochdruckteils 20a der Dampfturbine 20 ist über einen Zwischenüberhitzer 70 an den Dampfeinlaß 72 des Mitteldruckteils 20b der Dampfturbine 20 angeschlossen. Dessen Dampfauslaß 74 ist über eine Überströmleitung 76 mit dem Dampfeinlaß 78 des Niederdruckteil 20c der Dampfturbine 20 verbunden. Der Dampfauslaß 80 des Niederdruckteils 20c der Dampfturbine 20 ist über eine Dampfleitung 82 an den Kondensator 26 angeschlossen, so daß ein geschlossener Wasser-Dampf-Kreislauf 24 entsteht.

Von der Speisewasserpumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economizer mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlaß 72 des Mitteldruckteils 20b der Dampfturbine 20 angeschlossen.

Von der Leitung 45 zweigt eine weitere, mit einem Ventil 108 absperrbare Leitung 110 ab, die an eine dem Niederdruckteil 20c der Dampfturbine 20 zugeordnete Niederdruckstufe 120 des Wasser-Dampf-Kreislaufs 24 angeschlossen ist. Die Niederdruckstufe 120 umfaßt eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F'' ist die Niederdrucktrommel 122 über eine Dampfleitung 128 an die Überströmleitung 76 angeschlossen. Der Wasser-Dampf-Kreislauf 24 der Gas- und Dampfturbinenanlage 1 umfaßt im Ausführungsbeispiel somit drei Druckstufen 50, 90, 120. Alternativ können aber auch weniger, insbesondere zwei, Druckstufen vorgesehen sein.

Zur bedarfsweisen Umführung des Speisewasserbehälters 46 ist die Leitung 45 unter Umgehung des Speisewasserbehälters 46 über eine Umführungsleitung 130 direkt an die Leitung 47 angeschlossen. Die Umführung des Speisewasserbehälters 46 ist dabei über eine Ventilanordnung aktivierbar, die ein dem Speisewasserbehälter 46 in der Leitung 45 unmittelbar vorgeschaltetes Absperrventil 132 sowie ein in die Umführungsleitung 130 geschaltetes Absperrventil 134 umfaßt.

Die Gas- und Dampfturbinenanlage 1 ist für die Fähigkeit eines Schwarzstartes auch beim Heißstart ausgelegt. Die Gasund Dampfturbinenanlage 1 kann somit nach einer Notabschaltung, beispielsweise infolge eines Ausfalls des angeschlossenen Stromnetzes, unmittelbar, also mit noch nicht abgekühltem Abhitzedampferzeuger 30, wiederangefahren werden, ohne daß dazu ein Rückgriff auf eine externe Stromversorgung erforderlich ist. Dazu ist der Gasturbinenanlage 1a eine Anzahl von nicht dargestellten Dieselaggregaten als Notstromaggregaten zugeordnet, die die zum Wiederanfahren der Gasturbinenanlage 1a benötigte Energie liefern.

Zum Wiederanfahren der Gas- und Dampfturbinenanlage 1 nach einer Notabschaltung wird die Gasturbine 2 durch die Dieselaggregate "hochgeschleppt", also unter angepaßter Steigerung der Brennstoffzufuhr sukzessive auf Nenndrehzahl gebracht. Das von der Gasturbine 2 abströmende Arbeitsmedium AM wird dabei bereits in dieser Phase über den Abhitzedampferzeuger 30 geleitet. Es führt bereits in dieser Phase zu einer Wärmeübertragung auf die verschiedenen Druckstufen 50, 90, 120 des Wasser-Dampf-Kreislaufs 24 und somit zur Dampferzeugung in den jeweils als Wasser-Dampf-Trommel ausgeführten Hochdruck-, Mitteldruck-, Niederdrucktrommeln 58, 96, 122. Damit ist - zumindest kurzzeitig - ein wirksamer Schutz des Abhitzedampferzeugers 30 vor Überhitzung gewährleistet.

Der in dieser Phase erzeugte Dampf wird jedoch zunächst nicht aus den Wasser-Dampf-Trommeln 58, 96, 122 abgeleitet, sondern vielmehr dort belassen, wobei der Dampfdruck ansteigt. Insbesondere wird er zunächst nicht dem Kondensator 26 zugeführt, so daß eine Kühlung des Kondensators 26 zunächst nicht notwendig ist. Entsprechend unterbleibt in dieser Phase eine Inbetriebnahme des dem Kondensator 26 zugeordneten Kühlsystems.

Ebenso unterbleibt in dieser ersten Phase des Wiederanfahrens eine Inbetriebnahme der Speisewasserpumpe 48 und des dieser zugeordneten Kühlsystems. Statt dessen erfolgt die Erstbefüllung der Wasser-Dampf-Trommeln 58, 96, 122 sowie eine bedarfsweise Nachspeisung mit unverdampftem Strömungsmedium mittels der Kondensatpumpeneinheit 44. Dazu wird in dieser Phase der Speisewasserbehälter 46 mittels der Umführungsleitung 130 und der Absperrventile 132, 134 umführt. Zur Erstbefüllung wird dabei der Druck in jeder Wasser-Dampf-Trommel 58, 96, 122 auf einen Wert unterhalb des Förderdruckes von etwa 25 bar der Kondensatpumpeneinheit 44 eingestellt.

In einer zweiten Phase des Wiederanfahrens, beispielsweise etwa 15 bis 30 min. nach dem Starten der Gasturbine 2, ist die Gasturbine 2 zur Energieversorgung der Eigenverbraucher der Gas- und Dampfturbinenanlage 1 in der Lage. Erst in dieser Phase, also nach erfolgter Lastaufnahme der Gasturbine 2, werden die Hilfssysteme des Abhitzedampferzeugers 30, wie beispielsweise der Kondensator 26 und die Speisewasserpumpe 48 und die diesen zugeordneten Kühlsysteme, wieder aktiviert. Erst in dieser Phase wird somit für den Kondensator 26 die Betriebsbereitschaft wiederhergestellt. Danach wird dem Kondensator der in der ersten Phase des Wiederanfahrens in den Wasser-Dampf-Trommeln 58, 96, 122 erzeugte Dampf zugeleitet.

In der ersten Phase des Wiederanfahrens wird somit konsequent auf den Einsatz besonders energieaufwendiger Eigenverbraucher verzichtet. Die für den Schwarzstart vorgesehenen Notstromaggregate können somit entsprechend gering dimensioniert und somit im Hinblick auf den Herstellungsaufwand und die damit verbundenen Kosten günstig ausgeführt sein.

## Patentansprüche

1. Verfahren zum Wiederanfahren einer Gas- und Dampfturbinen-Anlage (1), bei dem das aus einer Gasturbine (2) austretende Rauchgas über einen Abhitzedampferzeuger (30) geführt wird, dessen Heizflächen in den Wasser-Dampf-Kreislauf (24) einer Dampfturbine (20) geschaltet sind, wobei in einer Anzahl von in den Wasser-Dampf-Kreislauf (24) geschalteten Wasser-Dampf-Trommeln (58, 96, 122) Dampf erzeugt wird,
**dadurch gekennzeichnet, daß** die Zuführung des in den Wasser-Dampf-Trommeln (58, 96, 122) erzeugten Dampfes in einen in den Wasser-Dampf-Kreislauf (24) der Dampfturbine (20) geschalteten Kondensator (26) und die Einspeisung von aus dem Kondensator (26) abströmenden Speisewasser (S) in eine Hochdruckstufe (20a) der Dampfturbine (20) mittels einer Speisewasserpumpe (48) erst bei erfolgter Lastaufnahme der Gasturbine (2) freigegeben werden.

2. Verfahren zum Wiederanfahren einer Gas- und Dampfturbinen-Anlage (1) nach Anspruch 1, bei dem vor einem Start der Gasturbine (2) zur Erstbefüllung einer Anzahl von in den Wasser-Dampf-Kreislauf (24) der Dampfturbine (20) geschalteten Wasser-Dampf-Trommeln (58, 96, 122) eine der Speisewasserpumpe (48) vorgeschaltete Kondensatpumpe (44) verwendet wird.

3. Verfahren nach Anspruch 2, bei dem zur Erstbefüllung in jeder Wasser-Dampf-Trommel (58, 96, 122) ein im Vergleich zum Förderdruck der Kondensatpumpe (44) geringerer Druck eingestellt wird.

## Claims

1. Steam turbine (1) having an exhaust-steam casing (2), the outer jacket (34) of which comprises a first jacket part (36) in the shape of a cylindrical jacket, which is connected via a stiffening ring (38) to a second jacket part (40) in the shape of a conical jacket, a guide element (44) in the shape of a conical jacket being arranged on the stiffening ring (38) in order to direct the exhaust-steam flow inside the outer jacket (34), and having a turbine rotor (6) which is mounted in an end bearing (4) arranged inside the exhaust-steam casing (2) and surrounded by an inner hub (12), the inner hub (12) comprising a first hub part (48) essentially in the shape of a conical jacket and a second hub part (50) essentially in the shape of a cylindrical jacket.

2. Steam turbine (1) according to Claim 1, the guide element (44) of which extends on the inlet side beyond the last moving-blade row as viewed in the direction of flow of the exhaust steam.

## Revendications

1. Turbine (1) à vapeur ayant une boîte (2) de vapeur d'échappement, dont la surface latérale (34) extérieure comprend une première partie (36) de surface latérale en forme de cylindre qui est reliée par un anneau (38) de rigidification à une deuxième partie (40) de surface latérale en forme de cône, un élément (44) de guidage en forme de cône étant prévu sur l'anneau (38) de rigidification pour le guidage du courant de vapeur d'échappement dans la surface latérale (34) extérieure et comprenant un rotor (6) de turbine qui est monté dans un palier (4) d'extrémité disposé à l'intérieur de la boîte (2) de vapeur d'échappement et entouré d'un moyeu (12) intérieur, le moyeu (12) intérieur comprenant une première partie (48) de moyeu essentiellement en forme de cône et une deuxième partie (50) de moyeu essentiellement en forme de cylindre.

2. Turbine (1) à vapeur suivant la revendication 1, dont l'élément (44) de guidage s'étend du côté entrée jusqu'au-delà de la dernière rangée d'aubes mobiles, considéré dans le sens d'écoulement de la vapeur d'échappement.
